# EUROPEAN PATENT APPLICATION

(11) **EP 4 072 113 A1**
(43) Date of publication of application: **12.10.2022**
(21) Application number: 20902404.1
(22) Date of filing: 18.12.2020
(51) Int. Cl.: H04M 1/725

(54) **DUAL-CONNECTIVITY MODE STARTING METHOD AND APPARATUS, AND MOBILE TERMINAL AND READABLE STORAGE MEDIUM**

(30) Priority: 18.12.2019 CN 201911312997
(71) Applicant: Oneplus Technology (Shenzhen) Co., Ltd., Shenzhen, Guangdong 518000 (CN)
(72) Inventor: DING, Jiayu, Shenzhen, Guangdong 518042 (CN)
(74) Representative: Ipside
(86) International application number: PCT/CN2020/137464
(87) International publication number: WO 2021/121359

(57) **Abstract**

Provided are a dual-connectivity mode starting method and apparatus, and a mobile terminal and a readable storage medium, relating to the field of Internet communications. In the present application, by querying, in preset register configuration values of all communication frequency bands stored in a mobile terminal, a first configuration value of a target primary frequency band and a second configuration value of a target secondary frequency band which correspond to a dual-connectivity mode to be started, and voluntarily calculating, according to the first configuration value and the second configuration value, a target starting configuration value corresponding to the dual-connectivity mode to be started, and finally configuring a control register by using the target starting configuration value, the control register can control a radio frequency circuit to activate the target primary frequency band and the target secondary frequency band.

## Description

### CROSS-REFERENCE TO RELATED APPLICATIONS

The present application claims priority of a Chinese patent application submitted to State Intellectual Property Office of China on December 18, 2019, with an application No. 201911312997.3 and a title of "DUAL-CONNECTIVITY MODE STARTING METHOD AND APPARATUS, AND MOBILE TERMINAL AND READABLE STORAGE MEDIUM"; the entire content thereof is incorporated herein by reference.

### TECHNICAL FIELD

The present application relates to the field of Internet communication, and in particular, to a dual-connectivity mode launching method and apparatus, a mobile terminal, and a readable storage medium.

### BACKGROUND

With continuous development of science and technology, Internet communication technology has developed rapidly, and device functions of mobile terminals (such as smart phones) have gradually transited from a 4G network dual-connectivity function that can activate different 4G frequency bands simultaneously to an ENDC (E-UTRA-NR Dual Connectivity, 4G-5G dual connectivity) function that can activate a 4G frequency band and a 5G frequency band simultaneously. In a process of enabling a mobile terminal to activate a certain dual-connectivity mode, in addition to requiring the mobile terminal itself to have hardware conditions capable of realizing dual-band activation, the mobile terminal also needs to acquire a register configuration value capable of simultaneously activating two communication frequency bands corresponding to the dual-connectivity mode, and write the acquired register configuration value into a register configured to adjust the communication frequency band currently activated by the mobile terminal, otherwise the mobile terminal will be unable to enable the dual connection mode correspondingly.

At present, the mainstream in the industry configures register configuration values for simultaneously enabling two communication frequency bands, which correspond to different dual-connectivity modes respectively, in advance on a mobile terminal, so that the mobile terminal, when needing to launch a certain dual-connectivity mode, can call a corresponding register configuration value to activate two communication bands corresponding to this dual-connectivity mode. However, for each dual-connectivity mode, it is also necessary to configure register configuration values of two communication frequency bands corresponding to the dual-connectivity mode when they work independently in the dual-connectivity mode, that is, a communication frequency band set corresponding to each dual-connectivity mode requires preconfiguring three register configuration values. Therefore, when a mobile terminal has more types of dual-connectivity modes, the mobile terminal needs to consume more memory resource to store combinations of register configuration values of different dual-connectivity modes, which affects using fluency of the mobile terminal.

### SUMMARY OF THE DISCLOSURE

Embodiments of the present application provide a dual-connectivity mode launching method and apparatus, a mobile terminal, and a readable storage medium, which can avoid the operation in the related art in which design engineers need to pre-configure register configuration values configured to activate corresponding communication frequency band combinations in different dual-connectivity modes, reduce memory resource consumption of a mobile terminal when storing the register configuration values, enable the mobile terminal to have more memory resource to ensure operation of the device, and improve using fluency of the mobile terminal.

Technical solutions adopted by embodiments of the present application are as follows.

In a first aspect, an embodiment of the present application provides a dual-connectivity mode launching method applicable to a mobile terminal including a control register and a radio frequency circuit, wherein the control register is configured to adjust a communication frequency band currently activated by the radio frequency circuit; the method includes: acquiring a dual-connectivity mode launching instruction, wherein the dual-connectivity mode launching instruction includes a target primary frequency band and a target secondary frequency band corresponding to a dual-connectivity mode to be launched; querying a first configuration value corresponding to the target primary frequency band and a second configuration value corresponding to the target secondary frequency band in preset register configuration values of all stored communication frequency bands; calculating a target launching configuration value corresponding to the dual-connectivity mode to be launched according to the first configuration value and the second configuration value; and based on the first configuration value and the second configuration value, configuring the control register using the target launching configuration value, and controlling the radio frequency circuit by the control register to activate the target primary frequency band and the target secondary frequency band to complete a launching operation for the dual-connectivity mode to be launched.

In an optional embodiment, the calculating a target launching configuration value corresponding to the dual-connectivity mode to be launched according to the first configuration value and the second configuration value includes: performing a binary conversion for the first configuration value to obtain a first binary value corresponding to the first configuration value; performing a binary conversion for the second configuration value to obtain a second binary value corresponding to the second configuration value; and performing a bitwise OR operation for the first binary value and the second binary value to obtain a target binary value corresponding to the target launching configuration value.

In an optional embodiment, based on the first configuration value and the second configuration value, configuring the control register using the target launching configuration value, and controlling the radio frequency circuit by the control register to activate the target primary frequency band and the target secondary frequency band includes: overwriting the first binary value into the control register to enable the control register to control the radio frequency circuit to activate the target primary frequency band; using the second binary value as a mask to determine a target bit of the target binary value that needs to be written into the control register; and writing a value of the target binary value at the target bit into a position in the control register corresponding to the target bit, so that the control register controls the radio frequency circuit to activate the target secondary frequency band on the basis of activating the target primary frequency band.

In an optional embodiment, the method further includes: setting and storing preset register configuration values corresponding to the control register of different communication frequency bands in the radio frequency circuit.

In a second aspect, an embodiment of the present application provides a dual-connectivity mode launching apparatus applicable to a mobile terminal including a control register and a radio frequency circuit, wherein the control register is configured to adjust a communication frequency band currently activated by the radio frequency circuit; the apparatus includes: an instruction acquiring module configured to acquire a dual-connectivity mode launching instruction, wherein the dual-connectivity mode launching instruction includes a target primary frequency band and a target secondary frequency band corresponding to a dual-connectivity mode to be launched; a configuration querying module configured to query a first configuration value corresponding to the target primary frequency band and a second configuration value corresponding to the target secondary frequency band in preset register configuration values of all stored communication frequency bands; a configuration calculating module configured to calculate a target launching configuration value corresponding to the dual-connectivity mode to be launched according to the first configuration value and the second configuration value; and a dual-connectivity launching module configured to: based on the first configuration value and the second configuration value, configure the control register using the target launching configuration value, and control the radio frequency circuit by the control register to activate the target primary frequency band and the target secondary frequency band to complete a launching operation for the dual-connectivity mode to be launched.

In an optional embodiment, the configuration calculating module includes a binary converting submodule and a binary calculating submodule; the binary converting submodule is configured to perform a binary conversion for the first configuration value to obtain a first binary value corresponding to the first configuration value; the binary converting submodule is further configured to perform a binary conversion for the second configuration value to obtain a second binary value corresponding to the second configuration value; the binary calculating submodule is configured to perform a bitwise OR operation for the first binary value and the second binary value to obtain a target binary value corresponding to the target launching configuration value.

In an optional embodiment, the dual-connectivity launching module includes a primary frequency band activating submodule, a target bit determining submodule, and a secondary frequency band activating submodule; the primary frequency band activating submodule is configured to overwrite the first binary value into the control register to enable the control register to control the radio frequency circuit to activate the target primary frequency band; the target bit determining submodule is configured to use the second binary value as a mask to determine a target bit of the target binary value that needs to be written into the control register; the secondary frequency band activating submodule is configured to write a value of the target binary value at the target bit into a position in the control register corresponding to the target bit, so that the control register controls the radio frequency circuit to activate the target secondary frequency band on the basis of activating the target primary frequency band.

In an optional embodiment, the apparatus further includes: a frequency band setting module configured to set and store preset register configuration values corresponding to the control register of different communication frequency bands in the radio frequency circuit.

In a third aspect, an embodiment of the present application provides a mobile terminal including a control register, a radio frequency circuit, a processor, and a memory; the memory stores machine executable instructions being executable by the processor, and the processor can execute the machine executable instructions to implement the dual-connectivity mode launching method according to any one of the above embodiments, wherein the control register is configured to adjust a communication frequency band currently activated by the radio frequency circuit.

In a fourth aspect, an embodiment of the present application provides a readable storage medium storing computer program, and the computer program, when being executed by a processor, implements the dual-connectivity mode launching method according to any one of the above embodiments.

The present application has the following advantageous effect: in the present application, by querying a first configuration value of a target primary frequency band and a second configuration value of a target secondary frequency band which correspond to a dual-connectivity mode to be launched in preset register configuration values of communication frequency bands stored in a mobile terminal, then voluntarily calculating, by the mobile terminal, a target launching configuration value corresponding to the dual-connectivity mode to be launched according to the first configuration value and the second configuration value, and finally configuring, by the mobile terminal and based on the first configuration value and the second configuration value, a control register using the target launching configuration value, the control register is enabled to control a radio frequency circuit to activate the target primary frequency band and the target secondary frequency band. In this way, in a condition without needing to pre-configure register configuration values configured to activate corresponding communication frequency band combinations in different dual-connectivity modes, it is ensured that the mobile terminal can voluntarily calculate target launching configuration values of the dual-connectivity mode to be launched and launch the dual-connectivity mode to be launched, so that memory resource consumption of the mobile terminal when storing register configuration values is reduced, the mobile terminal is enabled to have more memory resource to ensure operation of the device, and using fluency of the mobile terminal is improved.

In order to make the above purposes, characteristics, and advantages of the present application be more explicit and understandable, preferred embodiments are exemplified below, and are described in detail as follows in conjunction with the accompanying drawings.

### BRIEF DESCRIPTION OF THE DRAWINGS

In order to describe technical solutions in embodiments of the present application more clearly, drawings required being used in the embodiments will be simply introduced below. It should be understood that the following drawings only show some embodiments of the present application and therefore should not be regarded as limitation to the scope. For one of ordinary skill in the art, it is also possible to obtain other related drawings according to these drawings without paying any creative work.
FIG. 1 is a structural block diagram of a mobile terminal provided by an embodiment of the present application.
FIG. 2 is a first schematic flow chart of a dual-connectivity mode launching method provided by an embodiment of the present application.
FIG. 3 is a second schematic flow chart of a dual-connectivity mode launching method provided by an embodiment of the present application.
FIG. 4 is a first schematic functional module diagram of a dual-connectivity mode launching apparatus provided by an embodiment of the present application.
FIG. 5 is a schematic functional module diagram of a configuration calculating module provided by an embodiment of the present application.
FIG. 6 is a schematic functional module diagram of a dual-connectivity launching module provided by an embodiment of the present application.
FIG. 7 is a second schematic functional module diagram of a dual-connectivity mode launching apparatus provided by an embodiment of the present application.
Reference numbers: 10-mobile terminal; 11-memory; 12-processor; 13-control register; 14-radio frequency circuit; 100-dual-connectivity mode launching apparatus; 110-instruction acquiring module; 120-configuration querying module; 130-configuration calculating module; 140-dual-connectivity launching module; 131-binary converting submodule; 132-binary calculating submodule; 141-primary frequency band activating submodule; 142-target bit determining submodule; 143-secondary frequency band activating submodule; 150-frequency band setting module.

### DETAILED DESCRIPTION

Technical solutions in embodiments of the present application will be described clearly and completely below in conjunction with the accompanying drawings of the embodiments of the present application. It is obvious that the described embodiments are only some embodiments of the present application, but not all embodiments. Components of the embodiments of the present application, which are usually described and shown in the drawings herein, can be arranged and designed by various different configurations.

Therefore, the following detailed description for embodiments of the present application provided in the drawings are not intended to limit the claimed scope of the present application, but merely represent selected embodiments of the present application. Based on the embodiment of the present application, any other embodiment obtained by one of ordinary skill in the art without paying any creative work belongs to the protection scope of the present application.

It should be noted that relationship terms, such as the terms "first", "second", and the like are only used to separate an entity or operation with another entity or an operational, but do not necessarily require or imply that any such practical relationship or order exists between these entities or operations. Moreover, the terms "comprise", "include", or any other variable thereof are intended to cover non-exclusive inclusion, such that a process, method, article, or device including a series of elements not only includes those elements, but also includes other elements that are not expressly listed, or further includes elements that are inherent to such a process, method, article, or device. In the absence of more restrictions, an element defined by a statement "include a..." does not exclude another identical element existing in the process, method, article, or device including this element.

Some embodiments of the present application are illustrated in detail below with reference to the accompany drawings. The following embodiments and features in the embodiments can be combined with each other without conflict.

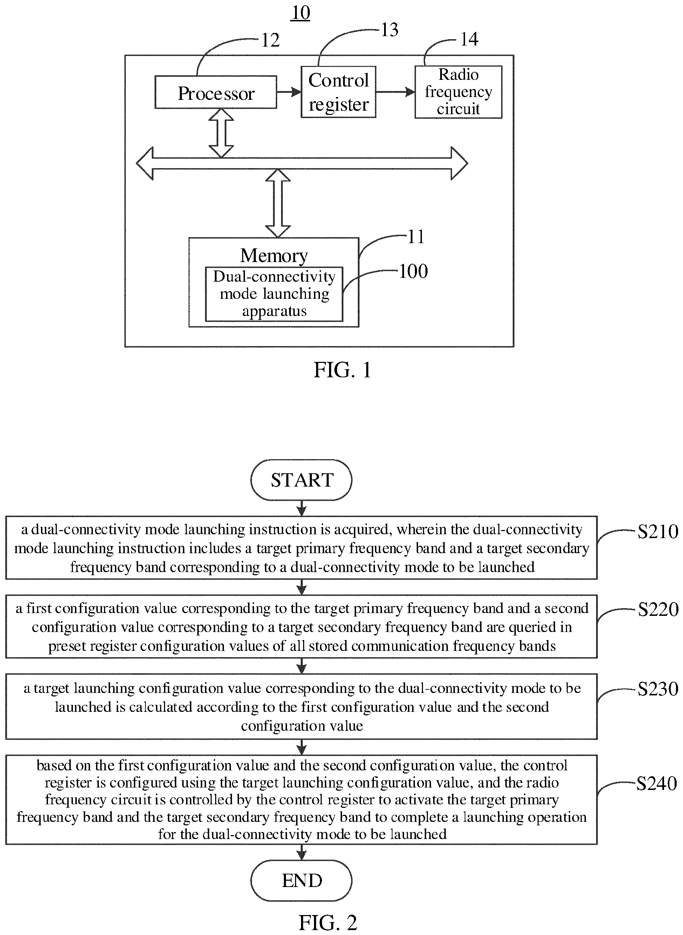

As shown in FIG. 1, FIG, 1 is a structural block diagram of a mobile terminal 10 provided by an embodiment of the present application. In this embodiment of the present application, the mobile terminal 10 can support launching in many kinds of dual-connectivity modes, and in a process of launching a certain dual-connectivity mode, can voluntarily calculate register configuration values corresponding to the dual-connectivity mode, which are configured to activate a communication frequency band combination corresponding to the dual-connectivity mode, and launch the dual-connectivity mode based on calculated register configuration values, without requiring a design engineer to pre-configure register configurations of different connection modes which are respectively configured to activate corresponding communication frequency band combinations. Thus, at the same time of reducing manpower configuration cost of engineers, memory resource consumption of the mobile terminal 10 when storing register configuration values is lowered, such that the mobile terminal 10 is enabled to have more memory resource to ensure operation of the device, and then using fluency of the mobile terminal 10 is improved. Among them, the mobile terminal 10 may be, but not limited to, a smart phone, a tablet computer, a smart watch, and so on.

In this embodiment, the mobile terminal 10 includes a dual-connectivity mode launching apparatus 100, a memory 11, a processor 12, a control register 13, and a radio frequency circuit 14. Regarding the memory 11, the processor 12, the control register 13, and the radio frequency circuit 14, these components are directly or indirectly electrically connected with each other to implement data transmission or interaction. For example, regarding the memory 11, the processor 12, the control register 13, and the radio frequency circuit 14, these components can achieve electric connection through one or more communication bus or signal line with each other.

In this embodiment, the memory 11 can be configured to store a program, and the processor, when receiving an executing instruction, can execute the program correspondingly. Among them, the memory 11 may be, but not limited to, a random access memory (RAM), a read only memory (ROM), a programmable read-only memory (PROM), an erasable programmable read-only memory (EPROM), an electric erasable programmable read-only memory (EEPROM), etc. Among them, the memory 11 can be further configured to store corresponding preset register configuration values of different communication frequency bands supported by the radio frequency circuit 14 in the control register 13, the preset register configuration values are used to represent current configuration values of the control register 13 when corresponding communication frequency bands are activated, preset register configuration values respectively corresponding to different communication frequency bands are completely different, one preset register configuration value is only in correspondence with one communication frequency band.

In this embodiment, the processor 12 can be an integrated circuit chip having signal processing capability. The processor 12 can be a general processor including a central processing unit (CPU), a network processor (NP), etc. The general processor can be a microprocessor, or the processor can also be any conventional processor, which can implement or perform any method, step, and logic block diagram disclosed in embodiments of the present application.

In this embodiment, the control register 13 is configured to adjust a communication frequency band currently activated by the radio frequency circuit 14. When a register configuration value currently loaded by the control register 13 is changed, the communication frequency band currently activated by the radio frequency circuit 14 will be correspondingly changed, so that the mobile terminal 10 can be in communication connection with other electronic devices (e.g., a 4G network base station, a 5G network base station) through cooperation between the control register 13 and the radio frequency circuit 14, and perform data interaction.

In this embodiment, the radio frequency circuit 14 includes at least one antenna and at least one communication switch. The radio frequency circuit 14, by adjusting a switch state of each communication switch, enables a conducted communication switch and the at least one antenna to cooperate with each other and form a radio frequency channel that can activate a certain communication frequency band, and then enables the mobile terminal 10 to perform network communication through the activated communication frequency band.

Among them, preset register configuration values corresponding to the same communication frequency band for different antennas are different. When the control register 13 loads a preset register configuration value of a certain communication frequency band, the radio frequency circuit 14 will correspondingly connect a communication switch corresponding to the preset register configuration value, so that the radio frequency circuit 14 uses an antenna corresponding to the preset register configuration value as a communication medium to form a radio frequency channel configured to activate the communication frequency band.

In this embodiment, the dual-connectivity mode launching apparatus 100 includes at least one software functional module that can be stored in the memory 11 in the form of software or firmware or fixed in an operating system of the mobile terminal 10. The processor 12 can be used to execute executable modules stored in the memory 11, for example, the software functional module and computer programs included in the dual-connectivity mode launching apparatus 100. By the dual-connectivity mode launching apparatus 100, the mobile terminal 10 can voluntarily calculate a target launching configuration value of a dual-connectivity mode to be launched, without requiring a design engineer to pre-configure register configuration values of different dual-connectivity modes which are configured to activate corresponding communication frequency band combinations, and then launch the dual-connectivity mode to be launched, such that memory resource consumption of the mobile terminal 10 when storing register configuration values is lowered, the mobile terminal 10 is enabled to have more memory resource to ensure operation of the device, and then using fluency of the mobile terminal 10 is improved.

It can be understood that the schematic block diagram shown in FIG. 1 is only one kind of structural composition schematic diagram of the mobile terminal 10, the mobile terminal 10 may also include more or less components than that shown in FIG. 1, or have configurations differing from that shown in FIG. 1. The components shown in FIG. 1 can be implemented by hardware, software, or combination thereof.

In the present application, in order to ensure that the mobile terminal 10 can voluntarily calculate a target launching configuration value corresponding to a dual-connectivity mode to be launched and then launch the dual-connectivity mode to be launched, the operation in the related art in which design engineers need to pre-configure register configuration values configured to activate corresponding communication frequency band combinations in different dual-connectivity modes is avoided from occurring, memory resource consumption of the mobile terminal 10 is reduced, and using fluency of the mobile terminal 10 is improved, the present application realizes the aforementioned functions in a manner of providing a dual-connectivity mode launching method applicable to the above mobile terminal 10. The dual-connectivity mode launching method provided by the present application is correspondingly described below.

Optionally, as shown in FIG. 2, FIG. 2 is a first schematic flow chart of a dual-connectivity mode launching method provided by an embodiment of the present application. In this embodiment of the present application, a flow and steps of the dual-connectivity mode launching method shown in FIG. 2 are as follows.

Operation S210, a dual-connectivity mode launching instruction is acquired, wherein the dual-connectivity mode launching instruction includes a target primary frequency band and a target secondary frequency band corresponding to a dual-connectivity mode to be launched.

In this embodiment, the target primary frequency band is configured to represent a primary communication frequency band in the dual-connectivity mode to be launched, and the target secondary frequency band is configured to represent a secondary communication frequency band in the dual-connectivity mode to be launched. The mobile terminal 10 can show information of communication frequency bands respectively supported by each antenna in the radio frequency circuit 14 to a user, and let the user to select any two communication frequency bands according to requirement as a communication frequency band combination corresponding to the dual-connectivity mode to be launched, and can also directly show frequency band combination information of different dual-connectivity modes to a user, and let the user to directly select a certain dual-connectivity mode according to requirement as the dual-connectivity mode to be launched. After a user determines a communication frequency band combination of a dual-connectivity mode to be launched on the mobile terminal 10, the mobile terminal 10 will correspondingly create a dual-connectivity mode launching instruction including a target primary frequency band and a target secondary frequency band in the dual-connectivity mode to be launched.

Operation S220, a first configuration value corresponding to the target primary frequency band and a second configuration value corresponding to a target secondary frequency band are queried in preset register configuration values of all stored communication frequency bands.

In this embodiment, when the mobile terminal 10 determines the target primary frequency band and the target secondary frequency bands in the dual-connectivity mode to be launched, according to positions of respectively corresponding antennas of the target primary frequency band and of the target secondary frequency band in the radio frequency circuit 14, and in combination with preset register configuration values respectively corresponding to all stored communication frequency bands, it will correspondingly query to obtain a corresponding first configuration value of the target primary frequency band in the control register 13 and a corresponding second configuration value of the target secondary frequency band in the control register 13. Among them, the first configuration value is a preset register configuration value of the target primary frequency band, and the second configuration value is a preset register configuration value of the target secondary frequency band.

For example, the radio frequency circuit 14 includes two radio frequency antennas, the control register 13 is a 8 bit register, wherein whether one radio frequency antenna A operates is determined by the first four bits of the control register 13, and whether another radio frequency antenna B operates is determined by the last four bits of the control register 13. When a communication frequency band a can be operated by the radio frequency antenna B, a preset register configuration value of the communication frequency band a corresponding to the radio frequency antenna B can be 0x01, and can also be 0x02, and can further be 0x04, actual configuration situations can be configured differently according to requirements. When the communication frequency band a can also be operated by the radio frequency antenna A, a preset register configuration value of the communication frequency band a corresponding to the radio frequency antenna A can be 0x10, and can also be 0x70, and can further be 0x90, actual configuration situations can be configured differently according to requirements.

Operation S230, a target launching configuration value corresponding to the dual-connectivity mode to be launched is calculated according to the first configuration value and the second configuration value.

In this embodiment, after determining the first configuration value corresponding to the target primary frequency band and the second configuration value corresponding to the target secondary frequency band, the mobile terminal 10 will voluntarily calculate to obtain a target launching configuration value configured to ensure simultaneously activating the target primary frequency band and the target secondary frequency band according to the first configuration value and the second configuration value, such that the control register 13 can activate the target primary frequency band and the target secondary frequency band by loading the target launching configuration value.

Optionally, the operation that the mobile terminal 10 calculates a target launching configuration value corresponding to the dual-connectivity mode to be launched according to the first configuration value and the second configuration value includes: performing a binary conversion for the first configuration value to obtain a first binary value corresponding to the first configuration value; performing a binary conversion for the second configuration value to obtain a second binary value corresponding to the second configuration value; and performing a bitwise OR operation for the first binary value and the second binary value to obtain a target binary value corresponding to the target launching configuration value.

Among them, the first binary value is a binary expression form of the first configuration value, the second binary value is a binary expression form of the second configuration value, and the target binary value is a binary expression form of the target launching configuration value; the target binary value obtained by calculation does not exist in binary expression forms of stored preset register configuration values.

Operation S240, based on the first configuration value and the second configuration value, the control register is configured using the target launching configuration value, and the radio frequency circuit is controlled by the control register to activate the target primary frequency band and the target secondary frequency band to complete a launching operation for the dual-connectivity mode to be launched.

In an embodiment of the present application, when the mobile terminal 10 obtains a target launching configuration value required by simultaneously activating the target primary frequency band and the target secondary frequency band, through correspondence relationships between the target launching configuration value and events of simultaneously activating the target primary frequency band and the target secondary frequency band, the mobile terminal 10 can directly uses the target launching configuration value to overwrite the control register 13, such that a current register value of the control register 13 is identical to the target launching configuration value. Thus, under action of the control register 13, the radio frequency circuit 14 can form a radio frequency channel corresponding to the target primary frequency band and a radio frequency channel corresponding to the target secondary frequency band, achieve effect of simultaneously activating the target primary frequency band and the target secondary frequency band, and complete a launching operation for the dual-connectivity mode to be launched.

In another embodiment of the present application, the operation that the mobile terminal 10 configures the control register 13 using the target launching configuration value based on the first configuration value and the second configuration value, and controls the radio frequency circuit 14 by the control register 13 to activate the target primary frequency band and the target secondary frequency band includes: overwriting the first binary value into the control register 13 to enable the control register 13 to control the radio frequency circuit 14 to activate the target primary frequency band; using the second binary value as a mask to determine a target bit of the target binary value that needs to be written into the control register 13; and writing a value of the target binary value at the target bit into a position in the control register 13 corresponding to the target bit, so that the control register 13 controls the radio frequency circuit 14 to activate the target secondary frequency band on the basis of activating the target primary frequency band.

Among them, the mobile terminal 10 can obtain a target bit of the target binary value of which a position corresponds to a code bit of the second binary value of which the numerical value is 1 by mapping the code bit of the second binary value of which the numerical value is 1 into the target binary value, and then write the numerical value of the target bit into a corresponding position of the control register 13 in which the first binary value has been written, so that a register value finally expressed by the control register 13 is identical to the target binary value. It is ensured that the radio frequency circuit 14, under control of the control register 13, can activate the target secondary frequency band on the basis of activating the target primary frequency band, thereby completing the launching operation for the dual-connectivity mode to be launched.

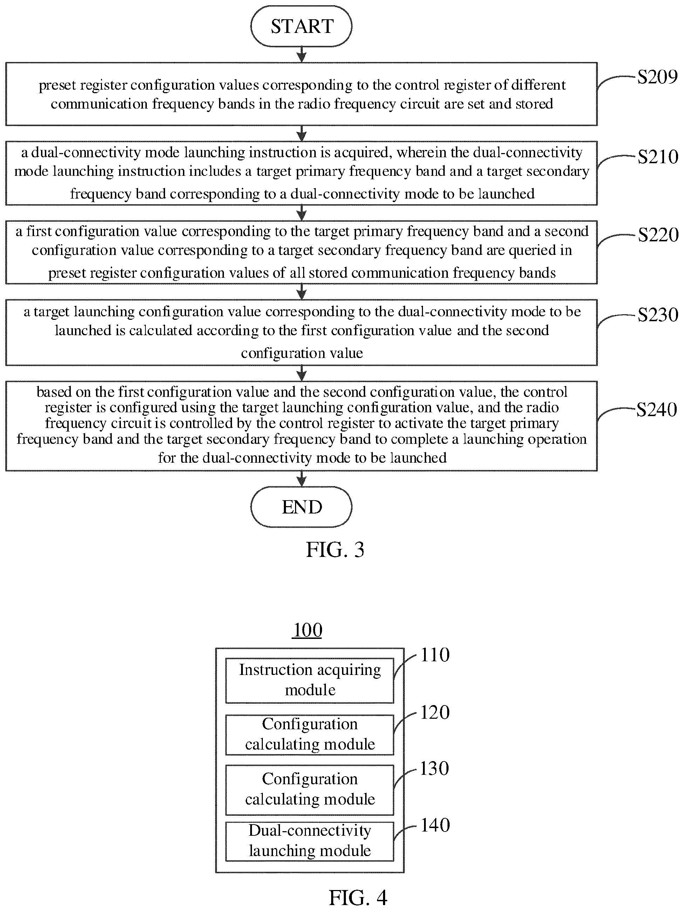

Optionally, as shown in FIG. 3, FIG. 3 is a second schematic flow chart of a dual-connectivity launching mode method provided by an embodiment of the present application. In this embodiment of the present application, the dual-connectivity mode launching mode can further include an operation S209.

Operation S209, preset register configuration values corresponding to the control register of different communication frequency bands in the radio frequency circuit are set and stored.

In this embodiment, a design engineer of the mobile terminal 10 can set a preset register configuration value of each communication frequency band in the control register 13 based on antenna distribution situation in the radio frequency circuit 14 and aiming at communication frequency bands supported by the radio frequency circuit 14, and then store them in the memory 11 of the mobile terminal 10. Thus, the design engineer does not need to pre-configure register configuration values configured to activate corresponding communication frequency band combinations in different dual-connectivity modes, at the same time of reducing manpower configuration cost of engineers, memory resource consumption of the mobile terminal 10 when storing register configuration values is lowered, such that the mobile terminal 10 is enabled to have more memory resource to ensure operation of the device, and then using fluency of the mobile terminal 10 is improved.

In the present application, the mobile terminal 10, by executing the dual-connectivity mode launching methods as shown in FIGS. 2 and 3, can voluntarily calculate a target launching configuration value of a dual-connectivity mode to be launched in the situation that a design engineer is not required to pre-configure register configuration values configured to activate corresponding communication frequency band combinations in different dual-connectivity modes, and then launchs the dual-connectivity mode to be launched. Thus, manpower configuration work amount of the design engineer is reduced, memory resource consumption of the mobile terminal 10 when storing register configuration values is lowered, such that the mobile terminal 10 is enabled to have more memory resource to ensure operation of the device, and then using fluency of the mobile terminal 10 is improved.

In the present application, in order to ensure that the dual-connectivity mode launching apparatus 100 included in the mobile terminal 10 can be normally implemented, the present application realizes its functions by a method of dividing functional modules for the dual-connectivity mode launching apparatus 100. The composition of the dual-connectivity mode launching apparatus 100 provided by the present application is correspondingly described below.

Optionally, as shown in FIG. 4, FIG. 4 is a first schematic functional module diagram of a dual-connectivity mode launching apparatus 100 provided by an embodiment of the present application. In this embodiment, the dual-connectivity mode launching apparatus 100 includes an instruction acquiring module 110, a configuration querying module 120, a configuration calculating module 130, and a dual-connectivity launching module 140.

The instruction acquiring module 110 is configured to acquire a dual-connectivity mode launching instruction, wherein the dual-connectivity mode launching instruction includes a target primary frequency band and a target secondary frequency band corresponding to a dual-connectivity mode to be launched.

The configuration querying module 120 is configured to query a first configuration value corresponding to the target primary frequency band and a second configuration value corresponding to the target secondary frequency band in preset register configuration values of all stored communication frequency bands.

The configuration calculating module 130 is configured to calculate a target launching configuration value corresponding to the dual-connectivity mode to be launched according to the first configuration value and the second configuration value.

The dual-connectivity launching module 140 is configured to: based on the first configuration value and the second configuration value, configure the control register using the target launching configuration value, and control the radio frequency circuit by the control register to activate the target primary frequency band and the target secondary frequency band to complete a launching operation for the dual-connectivity mode to be launched.

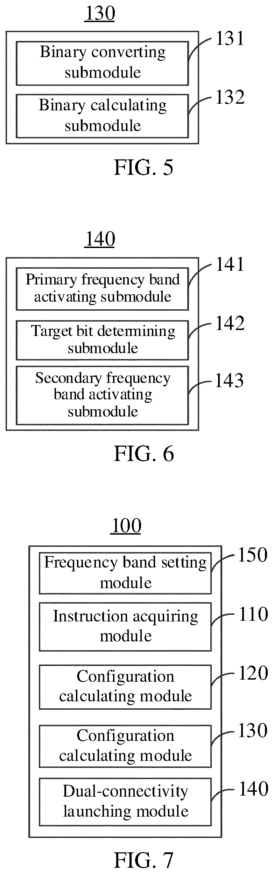

Optionally, as shown in FIG. 5, FIG. 5 is a schematic functional module diagram of the configuration calculating module 130 provided by an embodiment of the present application. In this embodiment of the present application, the configuration calculating module 130 includes a binary converting submodule 131 and a binary calculating submodule 132.

The binary converting submodule 131 is configured to perform a binary conversion for the first configuration value to obtain a first binary value corresponding to the first configuration value.

The binary converting submodule 131 is further configured to perform a binary conversion for the second configuration value to obtain a second binary value corresponding to the second configuration value.

The binary calculating submodule 132 is configured to perform a bitwise OR operation for the first binary value and the second binary value to obtain a target binary value corresponding to the target launching configuration value.

Optionally, as shown in FIG. 6, FIG. 6 is a schematic functional module diagram of a dual-connectivity launching module 140 provided by an embodiment of the present application. In this embodiment of the present application, the dual-connectivity launching module 140 includes a primary frequency band activating submodule 141, a target bit determining submodule 142, and a secondary frequency band activating submodule 143.

The primary frequency band activating submodule 141 is configured to overwrite the first binary value into the control register to enable the control register to control the radio frequency circuit to activate the target primary frequency band.

The target bit determining submodule 142 is configured to use the second binary value as a mask to determine a target bit of the target binary value that needs to be written into the control register.

The secondary frequency band activating submodule 143 is configured to write a value of the target binary value at the target bit into a position in the control register corresponding to the target bit, so that the control register controls the radio frequency circuit to activate the target secondary frequency band on the basis of activating the target primary frequency band.

Optionally, as shown in FIG. 7, FIG. 7 is a second schematic functional module diagram of a dual-connectivity mode launching apparatus 100 provided by an embodiment of the present application. In this embodiment, the dual-connectivity mode launching apparatus 100 can further include a frequency band setting module 150.

The frequency band setting module 150 is configured to set and store preset register configuration values corresponding to the control register of different communication frequency bands in the radio frequency circuit.

It should be noted that the basis principle and generated technical effect of the dual-connectivity mode launching apparatus 100 provided by embodiments of the present application are the same as that of the aforementioned dual-connectivity mode launching method. For a brief description, for the parts not mentioned in these embodiments, reference may be made to the above description content aiming at the dual-connectivity mode launching method.

In embodiments provided by the present application, it should be understood that the disclosed apparatus and method may also be implemented in other manners. The apparatus embodiments described above are merely illustrative, for example, the flowcharts and block diagrams in the accompanying drawings illustrate possible architectures, functions, and operations of apparatuses, methods and computer program products according to embodiments of the present application. In this regard, each block in the flowcharts or block diagrams may represent a module, a program segment, or a portion of codes, the module, program segment, or portion of codes contains one or more executable instruction configured for implementing specified logical functions. It should also be noted that, in some alternative implementations, the functions noted in the blocks may also occur out of the order noted in the figures. For example, two blocks in succession may, in fact, be executed substantially concurrently, or they may sometimes be executed in the reverse order, depending upon involved functions. It is also noted that each block in the block diagrams and/or flowcharts, and combinations of the blocks in the block diagrams and/or flowcharts, can be implemented by dedicated hardware-based systems that perform specified functions or actions, or can be implemented by a combination of dedicated hardware and computer instructions.

In addition, functional modules in each embodiment of the present application may be integrated together to form an independent part, or each module may exist independently, or two or more modules may be integrated to form an independent part.

If the functions are implemented in the form of software function modules and sold or used as independent products, they may be stored in a readable storage medium. Based on this understanding, the essence of the technical solutions of the present application, or parts that contribute to the prior art, or parts of the technical solutions, can be embodied in the form of software products. The computer software products are stored in a readable storage medium, and include several instructions for causing a computer device (which may be a personal computer, a server, or a network device, etc.) to execute all or some of the operations of the methods described in the embodiments of the present application. The aforementioned readable storage medium includes: a U disk, a mobile hard disk, a Read-Only Memory (ROM), a Random Access Memory (RAM), a magnetic disk, an optical disk, and other various media that can store program codes.

In conclusion, in the dual-connectivity mode launching method and apparatus, mobile terminal, and readable storage medium provided by the present application, by querying a first configuration value of a target primary frequency band and a second configuration value of a target secondary frequency band which correspond to a dual-connectivity mode to be launched in preset register configuration values of communication frequency bands stored in a mobile terminal, then voluntarily calculating, by the mobile terminal, a target launching configuration value corresponding to the dual-connectivity mode to be launched according to the first configuration value and the second configuration value, and finally configuring, by the mobile terminal and based on the first configuration value and the second configuration value, a control register using the target launching configuration value, the control register is enabled to control a radio frequency circuit to activate the target primary frequency band and the target secondary frequency band. In this way, in a condition without needing to pre-configure register configuration values configured to activate corresponding communication frequency band combinations in different dual-connectivity modes, it is ensured that the mobile terminal can voluntarily calculate target launching configuration values of the dual-connectivity mode to be launched and launch the dual-connectivity mode to be launched, so that memory resource consumption of the mobile terminal when storing register configuration values is reduced, the mobile terminal is enabled to have more memory resource to ensure operation of the device, and using fluency of the mobile terminal is improved.

The above-described are only possible embodiments pf the present application, and are not intended to limit the present application. For those skilled in the art, the present applicant can have various modifications and changes. Any modification, equivalent replacement, and improvement made within the spirit and principle of the present application should be included in the protection scope of the present application.

## Claims

1. A dual-connectivity mode launching method applicable to a mobile terminal comprising a control register and a radio frequency circuit, **characterized in that** the control register is configured to adjust a communication frequency band currently activated by the radio frequency circuit; wherein the method comprises:
acquiring a dual-connectivity mode launching instruction, wherein the dual-connectivity mode launching instruction includes a target primary frequency band and a target secondary frequency band corresponding to a dual-connectivity mode to be launched;
querying a first configuration value corresponding to the target primary frequency band and a second configuration value corresponding to the target secondary frequency band in preset register configuration values of all stored communication frequency bands;
calculating a target launching configuration value corresponding to the dual-connectivity mode to be launched according to the first configuration value and the second configuration value; and
based on the first configuration value and the second configuration value, configuring the control register using the target launching configuration value, and controlling the radio frequency circuit by the control register to activate the target primary frequency band and the target secondary frequency band to complete a launching operation for the dual-connectivity mode to be launched.

2. The method according to claim 1, wherein the dual-connectivity mode launching instruction is generated based on communication frequency band information or frequency band combination information shown by the mobile terminal, and the frequency band combination information includes at least two pieces of communication frequency band information.

3. The method according to claim 1, wherein the calculating a target launching configuration value corresponding to the dual-connectivity mode to be launched according to the first configuration value and the second configuration value comprises:
obtaining a first binary value corresponding to the first configuration value by performing a binary conversion for the first configuration value;
obtaining a second binary value corresponding to the second configuration value by performing a binary conversion for the second configuration value; and
obtaining a target binary value corresponding to the target launching configuration value by performing a bitwise OR operation for the first binary value and the second binary value.

4. The method according to claim 3, wherein the based on the first configuration value and the second configuration value, configuring the control register using the target launching configuration value, and controlling the radio frequency circuit by the control register to activate the target primary frequency band and the target secondary frequency band comprises:
enabling the control register to control the radio frequency circuit to activate the target primary frequency band by overwriting the first binary value into the control register;
determining a target bit of the target binary value that needs to be written into the control register by using the second binary value as a mask; and
writing a value of the target binary value at the target bit into a position in the control register corresponding to the target bit, so that the control register controls the radio frequency circuit to activate the target secondary frequency band on the basis of activating the target primary frequency band.

5. The method according to any one of claims 1-4, further comprising:
setting and storing preset register configuration values corresponding to the control register of different communication frequency bands in the radio frequency circuit.

6. A dual-connectivity mode launching apparatus applicable to a mobile terminal including a control register and a radio frequency circuit, **characterized in that** the control register is configured to adjust a communication frequency band currently activated by the radio frequency circuit; wherein the apparatus comprises:
an instruction acquiring module configured to acquire a dual-connectivity mode launching instruction, wherein the dual-connectivity mode launching instruction includes a target primary frequency band and a target secondary frequency band corresponding to a dual-connectivity mode to be launched;
a configuration querying module configured to query a first configuration value corresponding to the target primary frequency band and a second configuration value corresponding to the target secondary frequency band in preset register configuration values of all stored communication frequency bands;
a configuration calculating module configured to calculate a target launching configuration value corresponding to the dual-connectivity mode to be launched according to the first configuration value and the second configuration value; and
a dual-connectivity launching module configured to: based on the first configuration value and the second configuration value, configure the control register using the target launching configuration value, and control the radio frequency circuit by the control register to activate the target primary frequency band and the target secondary frequency band to complete a launching operation for the dual-connectivity mode to be launched.

7. The apparatus according to claim 6, wherein the configuration calculating module comprises a binary converting submodule and a binary calculating submodule;
the binary converting submodule is configured to obtain a first binary value corresponding to the first configuration value by performing a binary conversion for the first configuration value;
the binary converting submodule is further configured to obtain a second binary value corresponding to the second configuration value by performing a binary conversion for the second configuration value;
the binary calculating submodule is configured to obtain a target binary value corresponding to the target launching configuration value by performing a bitwise OR operation for the first binary value and the second binary value.

8. The apparatus according to claim 7, wherein the dual-connectivity launching module comprises a primary frequency band activating submodule, a target bit determining submodule, and a secondary frequency band activating submodule;
the primary frequency band activating submodule is configured to enable the control register to control the radio frequency circuit to activate the target primary frequency band by overwriting the first binary value into the control register;
the target bit determining submodule is configured to determine a target bit of the target binary value that needs to be written into the control register by using the second binary value as a mask;
the secondary frequency band activating submodule is configured to write a value of the target binary value at the target bit into a position in the control register corresponding to the target bit, so that the control register controls the radio frequency circuit to activate the target secondary frequency band on the basis of activating the target primary frequency band.

9. The apparatus according to any one of claims 6-8, further comprising:
a frequency band setting module configured to set and store preset register configuration values corresponding to the control register of different communication frequency bands in the radio frequency circuit.

10. A mobile terminal, comprising a control register, a radio frequency circuit, a processor, and a memory; **characterized in that** the memory stores machine executable instructions being executable by the processor, and the processor can execute the machine executable instructions to implement the dual-connectivity mode launching method according to any one of claims 1-5, wherein the control register is configured to adjust a communication frequency band currently activated by the radio frequency circuit.

11. A readable storage medium storing a computer program, **characterized in that** the computer program, when being executed by a processor, implements the dual-connectivity mode launching method according to any one of claims 1-5.
